# FASCICULE DE BREVET EUROPEEN

(11) **EP 0 399 869 B1**
(45) Date de publication et mention de la délivrance du brevet: **13.01.1993**
(21) Numéro de dépôt: 90401261.4
(22) Date de dépôt: 11.05.1990
(51) Int. Cl.: B60R 25/02

(54) **Axe de volant formant organe de blocage antivol**
Diebstahlsicherungsorgan bildende Lenkradachse
Steering wheel axis forming an anti-theft locking device

(30) Priorité: 22.05.1989 FR 8906655
(43) Date de publication de la demande: 28.11.1990
(73) Titulaire: ECIA - EQUIPEMENTS ET COMPOSANTS POUR L'INDUSTRIE AUTOMOBILE, F-25400 Audincourt (FR)
(72) Inventeur: Barnabe, Jean Pierre, F-25700 Valentigney (FR); Hoblingre, André, F-25700 Valentigney (FR); Lapalu, Nicolas, F-25700 Valentigney (FR); Passebecq, Ghislain, F-25700 Valentigney (FR)
(74) Mandataire: Habasque, Etienne Joel Jean-François

(56) Documents cités:
- FR-A- 2 301 318
- FR-A- 2 508 860
- FR-E- 21 766
- US-A- 2 835 275

## Description

Les dispositifs antivol pour colonne de direction de véhicule automobile, les plus connus, comportent un verrou qui est fixé sur la carrosserie et dont le pêne pénètre dans une fente du tube enveloppe de la colonne ainsi que dans une fente d'un manchon solidaire de l'axe de volant. Lorsqu'il est dans cette position, le pêne interdit donc tout déplacement relatif de la colonne et de l'axe de volant, c'est-à-dire la conduite du véhicule. De tels systèmes sont connus par exemple du document FR-E-21 766.

La présence du manchon et la nécessité de sa fixation à l'axe de volant complique toutefois la réalisation de la colonne de direction. On utilise donc de plus en plus des dispositifs dans lesquels le pêne est bloqué dans une fente pratiquée dans l'axe de volant lui-même. Malheureusement on ne peut disposer, dans ce cas, que d'un nombre limité de positions de blocage car il n'est pas possible d'accroître le nombre de fentes sans réduire la résistance du dispositif antivol et celle-ci doit être suffisante pour surmonter le couple exercé sur lui, à l'aide du volant, lors d'une tentative de vol.

Or, il est de plus en plus désiré de pouvoir assurer le verrouillage dans des positions angulaires multiples de la colonne de direction, sans avoir à effectuer une manoeuvre de braquage importante pour assurer au pêne son efficacité.

La présente invention a pour but de répondre à cette exigence en conservant les avantages du verrouillage direct sur l'axe de volant.

Cette invention a en effet pour objet un axe de volant ayant un corps tubulaire cylindrique, de section circulaire, qui comporte une partie profilée formant, dans sa face extérieure, des rainures longitudinales de blocage ayant une profondeur au moins égale à l'épaisseur de paroi du corps tubulaire, et, d'autre part, dans sa face interne, des bossages longitudinaux régulièrement espacés.

Selon une autre caractéristique, sur la face extérieure de l'axe de volant, les rainures de blocage sont séparées par des nervures pleines, ayant une épaisseur sensiblement égale à l'épaisseur de paroi du corps tubulaire.

Selon un mode préféré de réalisation les nervures ont des faces latérales qui convergent vers l'intérieur du tube et font entre elles un angle supérieur à l'angle au centre correspondant à la nervure.

La forme et la dimension des rainures longitudinales correspondent à celles du pêne du verrou tandis que chaque nervure pleine forme un organe de blocage susceptible de résister à un couple important lors d'une éventuelle tentative de vol. Les rainures longitudinales et les nervures étant régulièrement réparties sur toute la périphérie de l'axe de volant, déterminent un certain nombre de positions de blocage qui sont séparées par des distances angulaires relativement faibles.

La description ci-dessous d'un mode de réalisation, donné à titre d'exemple non limitatif et représenté aux dessins annexés, fera d'ailleurs ressortir les avantages et caractéristiques de l'invention. Sur ces dessins

La figure 1 est une vue en élévation d'un axe de volant selon l'invention.

La figure 2 est une vue à plus grande échelle de la partie de blocage de l'axe de volant de la Fig.1.

La figure 3 est une vue en coupe suivant la ligne 3-3 de la Fig.2.

La figure 4 est une vue en coupe transversale, à échelle agrandie, d'une variante de réalisation de l'organe de blocage.

La figure 5 est une vue analogue à la Fig.4 d'une autre variante de réalisation.

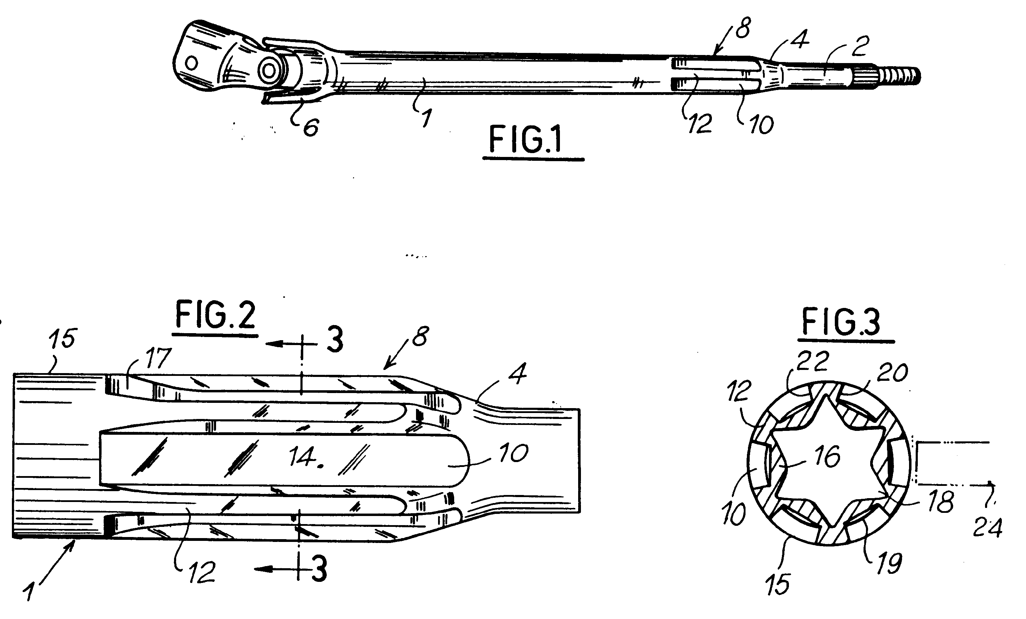

L'axe de volant représenté sur la Fig.1 comporte un corps tubulaire cylindrique 1, de section circulaire, qui est prolongé à l'une de ses extrémités par une portion de plus petit diamètre 2 formant support de volant. Ce support de volant 2 est relié au corps cylindrique 1 par une partie tronconique 4. A son extrémité opposée le corps cylindrique 1 est élargi pour former les branches d'une fourche de cardan 6.

Sur une portion de sa longueur, de préférence au voisinage de la partie tronconique 4, le corps cylindrique 1 comporte une partie profilée 8 formant organe de blocage. En effet, dans sa face extérieure sont formées un certain nombre de rainures longitudinales rectilignes 10 (Fig.2 et 3) dont la profondeur correspond au moins à l'épaisseur de paroi du tube initial, c'est-à-dire du corps tubulaire 1. La forme, ou plus exactement la largeur, de chacune des rainures 10 correspond à la forme d'un pêne de verrou antivol destiné à coopérer avec ces rainures. Les rainures 10 sont séparées les unes des autres par des nervures 12 qui sont pleines sur toute la profondeur des rainures 10 c'est-à-dire sur une hauteur correspondant sensiblement à l'épaisseur du tube initial.

Les fonds 14 des rainures 10 sont reliés à la face extérieure 15 du corps cylindrique 1 par des portions tronconiques 17 tandis qu'à leur extrémité opposée, dans le mode de réalisation représenté, ces fonds 14 se prolongent de manière rectiligne dans la portion tronconique 4.

La face interne du tube profilé 8 comporte une série de bossages 16 qui délimitent entre eux des rainures de section en V, 18, se rétrécissant vers l'extérieur. Comme le montre plus particulièrement la Fig.3, chacun des sommets du V 18 se trouve en regard de la partie médiane d'une nervure 12, à une distance de l'axe du corps cylindrique 1 sensiblement égale au rayon de la face interne 19 de ce corps cylindrique.

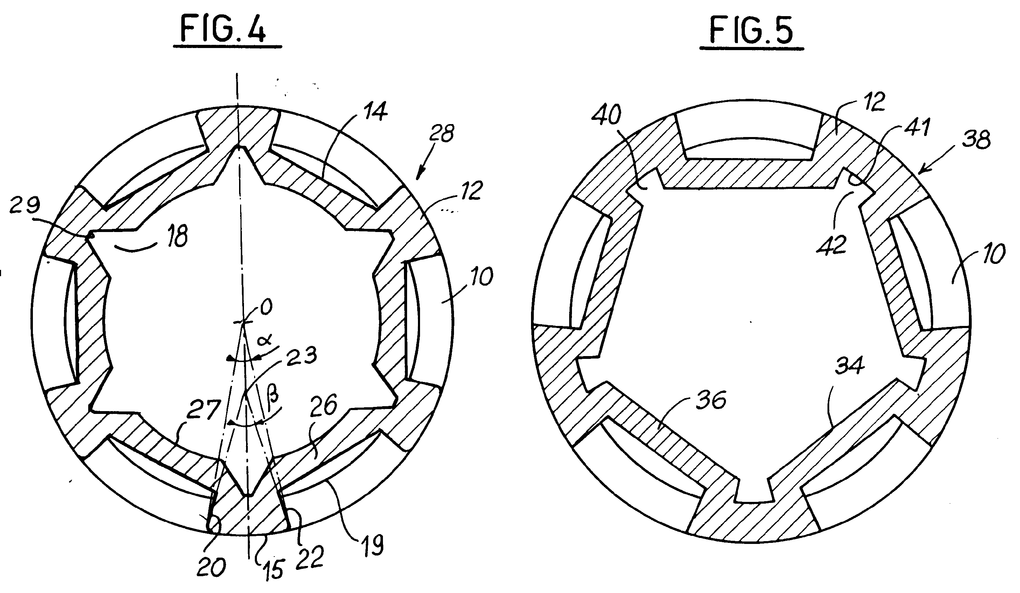

De préférence chacune des nervures 12 est limitée par deux faces latérales 20, 22 qui convergent en direction de l'intérieur du tube, vers un axe 23 situé à l'intérieur de l'angle au centre α correspondant à la nervure elle-même (Fig.4). Ainsi chacune de ces faces latérales est en retrait vers l'intérieur par rapport au rayon correspondant de la face extérieure 15 du corps cylindrique et les faces 20, 22 font entre elles un angle β supérieur à cet angle au centre. Cette inclinaison des faces latérales 20 et 22 facilite le contact entre le pêne du verrou et la nervure 12 correspondante, et par suite le blocage entre ces deux organes notamment lorsqu'un couple de rotation est donné à l'axe. La résistance de l'axe de volant au couple exercée lors d'une tentative de vol est ainsi accrue.

Bien entendu la partie profilée 8 comporte des rainures 10 et des nervures 12 alternées sur la totalité de sa périphérie, de sorte que l'axe de volant dispose d'un nombre correspondant de positions de blocage régulièrement espacées. Il peut par exemple, comme représenté sur la Fig.3, comporter six rainures 10 c'est-à-dire six positions de blocage. Ce nombre peut toutefois varier en fonction de la dimension du pêne et/ou du diamètre du corps cylindrique il peut être de deux à cinq ou au contraire être supérieur à six. La largeur circonférentielle de chaque nervure 12 conserve toutefois une valeur suffisante pour lui permettre de résister à un couple important.

Il apparaîtra clairement que l'organe de blocage formé par la partie profilée 8 peut être situé en tout point du corps cylindrique 1 de façon à correspondre à la position du verrou sur la carrosserie.

Bien que l'axe de volant représenté sur la Fig.1 soit d'une seule pièce, l'invention s'étend également à un axe de volant réalisé en deux parties et notamment à un axe de volant télescopique. Le demi axe externe comporte alors l'organe de blocage 8 tandis que le demi-axe interne est conformé de façon que sa face extérieure ait une forme complémentaire de celle de la face interne de la partie profilée ou organe de blocage 8. Le demi-axe interne peut ainsi coulisser dans cette partie profilée tout en en étant solidaire en rotation.

Les organes de blocage représentés en section droite sur les Fig.4 et 5 sont tout particulièrement adaptés dans ce cas. En effet l'organe de blocage 28 de la Fig.4 comporte intérieurement des bossages 26 dont le sommet est concave et forme une portion de cylindre 27 coaxiale au corps du tube 1, c'est-à-dire aux faces 15 et 19 de ce dernier. L'ensemble des bossages délimite ainsi un volume de forme sensiblement cylindrique. Comme dans le mode de réalisation de la Fig.3, les bossages 26 sont séparés les uns des autres par des rainures en V 18, rétrécies vers l'extérieur, dont les sommets 29 sont situés dans les plans médians des nervures 12. Un demi-axe de volant ayant une forme générale extérieure cylindrique et des ailettes rétrécies vers l'extérieur, six dans le cas représenté, s'adapte facilement de manière coulissante, à l'intérieur d'un tel organe de blocage.

Selon une autre variante de réalisation représentée sur la Fig.5, les bossages internes 36 d'un organe de blocage 38 ont une face interne plate 34. Les bossages 36 délimitent ainsi entre eux un volume prismatique dont la base est un polygone régulier, un pentagone dans le cas représenté.

Les bossages 36 sont bien entendu séparés par des rainures 40 qui sont, comme les rainures 18, symétriques par rapport aux plans médians des nervures 12. Ces rainures 40 sont de préférence évasées en direction de l'extérieur, leur fond 41 étant plus large que l'espace 42 entre les faces planes 34 adjacentes.

Un tel organe de blocage peut facilement recevoir un demi-axe de volant de forme générale prismatique dont la forme et la dimension correspondent à celles du volume délimité par les bossages 36 et les rainures 40. Il peut bien entendu également être formé sur un axe de volant en une seule pièce.

Dans tous les cas l'axe de volant peut être bloqué par l'introduction d'un pêne, tel que celui indiqué en traits mixtes en 24 sur la Fig.3, dans l'une des rainures 10. Il est clair que si, au moment où l'on veut actionner le dispositif antivol, le pêne 24 se trouve au moins partiellement en face d'une nervure 12 un faible braquage du volant suffit à amener l'une des rainures 10 voisines en regard de ce pêne et ainsi à permettre le verrouillage complet. Lors d'une tentative de vol, c'est-à dire lorsqu'un effort est exercé sur le volant pour tenter de le faire tourner, la nervure 12 voisine du pêne 24 se serre sur ce dernier et résiste efficacement au couple exercé sur elle. La forme particulière de l'organe de blocage, ou partie profilée 8, formé sans enlèvement de matière, assure ainsi au verrouillage une grande résistance et garantit la sécurité du véhicule.

## Revendications

1. Axe de volant comportant un corps tubulaire cylindrique (1) de section circulaire, caractérisé en ce que sa paroi comporte une partie profilée (8) formant, d'une part, dans sa face extérieure des rainures longitudinales (10) de réception et de blocage pour un pêne d'antivol, qui sont réparties sur sa circonférence et ont une profondeur au moins égale à l'épaisseur de paroi du corps tubulaire, et d'autre part, dans sa face intérieure des bossages longitudinaux (16, 36) régulièrement espacés.

2. Axe de volant suivant la revendication 1, caractérisé en ce qu'il comporte, entre les rainures (10), des nervures (12) qui sont pleines sur une épaisseur sensiblement égale à celle de la paroi du tube initial.

3. Axe de volant suivant l'une des revendications 1 et 2, caractérisé en ce que les nervures (12) sont délimitées par deux faces latérales (20, 22) qui convergent en direction de l'intérieur du corps et font entre elles un angle supérieur à l'angle au centre correspondant à la nervure.

4. Axe de volant suivant l'une des revendications précédentes, caractérisé en ce que les fonds (14) des rainures sont reliés à la face externe (15) du corps cylindrique (1) par des portions coniques (17).

5. Axe de volant suivant l'une des revendications précédentes, caractérisé en ce que la partie profilée formant organe de blocage (8) est située a l'extrémité du corps cylindrique (1) au voisinage d'un support de volant (2).

6. Axe de volant suivant l'une des revendications précédentes, caractérisé en ce qu'il comporte au moins de deux à cinq rainures (10) et autant de nervures (12) régulièrement espacées sur sa circonférence.

7. Axe de volant suivant l'une des revendications précédentes, caractérisé en ce que les bossages (16, 28) sont séparés par des rainures rétrécies vers l'extérieur (18).

8. Axe de volant suivant l'une des revendications 1 à 6, caractérisé en ce que les bossages (36) sont séparés par des rainures s'évasant vers l'extérieur (40).

9. Axe de volant suivant l'une des revendications précédentes, caractérisé en ce qu'il comporte un corps cylindrique (1) d'une seule pièce avec un support de volant (2) et une fourche de cardan (6).

10. Axe de volant suivant l'une des revendications 1 à 8, caractérisé en ce qu'il comporte deux demi-axes télescopiques, le demi-axe externe formant le corps cylindrique (1) et la partie profilée formant organe de blocage (8) tandis que le demi-axe interne a un profil extérieur complémentaire de celui de la face interne de cet organe de blocage.

11. Axe de volant suivant l'une des revendications précédentes, caractérisé en ce que les bossages internes (26, 36) délimitent un volume de forme générale cylindrique ou prismatique.

## Patentansprüche

1. Lenkradachse mit einem zylindrischen rohrförmigen Körper (1) mit kreisförmigem Querschnitt, dadurch gekennzeichnet, daß ihre Wand einen profilierten Teil (8) besitzt, der einerseits in seiner Außenfläche Längsnuten (10) zur Aufnahme und Blockierung eines Diebstahlsicherungsriegels, die auf seinem Umfang verteilt sind und deren Tiefe wenigstens gleich der Wanddicke des rohrförmigen Körpers ist, und andererseits in seiner Innenfläche in regelmäßigen Abständen angeordnete Längserhebungen (16, 36) formt.

2. Lenkradachse nach Anspruch 1, dadurch gekennzeichnet, daß sie zwischen den Nuten (10) Rippen (12) besitzt, die über eine Dicke, die im wesentlichen gleich der der Wand des Ausgangsrohrs ist, voll sind.

3. Lenkradachse nach einem der Ansprüche 1 und 2, dadurch gekennzeichnet, daß die Rippen (12) durch zwei Seitenflächen (20, 22) abgegrenzt sind, die auf das Innere des Körpers zu konvergieren und miteinander einen Winkel bilden, der größer als der der Rippe entsprechende Zentrumswinkel ist.

4. Lenkradachse nach einem der vorhergehenden Ansprüche, dadurch gekennzeichnet, daß die Böden (14) der Nuten mit der Außenfläche (15) des zylindrischen Körpers (1) durch konische Flächen (17) verbunden sind.

5. Lenkradachse nach einem der vorhergehenden Ansprüche, dadurch gekennzeichnet, daß der ein Blockierorgan bildende profilierte Teil (8) am Ende des zylindrischen Körpers (1) in Nähe eines Lenkradträgers (2) gelegen ist.

6. Lenkradachse nach einem der vorhergehenden Ansprüche, dadurch gekennzeichnet, daß er wenigstens zwei bis fünf Nuten (10) und ebensoviel Rippen (12) besitzt, die in regelmäßigen Abständen auf seinem Umfang angeordnet sind.

7. Lenkradachse nach einem der vorhergehenden Ansprüche, dadurch gekennzeichnet, daß die Erhebungen (16, 28) durch Nuten (18) getrennt sind, die sich nach außen verjüngen.

8. Lenkradachse nach einem der Ansprüche 1 bis 6, dadurch gekennzeichnet, daß die Erhebungen (36) durch Nuten (40) getrennt sind, die sich nach außen ausweiten.

9. Lenkradachse nach einem der vorhergehenden Ansprüche, dadurch gekennzeichnet, daß sie einen zylindrischen Körper (1) umfaßt, der einstückig mit einem Lenkradträger (2) und einer Kreuzgelenkgabel (6) ausgebildet ist.

10. Lenkradachse nach einem der Ansprüche 1 bis 8, dadurch gekennzeichnet, daß sie zwei teleskopartige Halbachsen umfaßt, wobei die äußere Halbachse den zylindrischen Körper (1) und den das Blockierorgan bildenden profilierten Teil (8) formt, während die innere Halbachse ein das Profil der Innenfläche des Blockierorgans ergänzendes Außenprofil hat.

11. Lenkradachse nach einem der vorhergehenden Ansprüche, dadurch gekennzeichnet, daß die inneren Erhebungen (26, 36) ein Volumen von allgemein zylindrischer oder prismatischer Form abgrenzen.

## Claims

1. Steering wheel shaft having a cylindrical tubular body (1) with a circular cross-section, characterized in that its wall has a profiled part (8) forming, on the one hand, in its outside face, longitudinal receiving and locking grooves (10) for an anti-theft catch, which are distributed over its circumference and have a depth at least equal to the wall thickness of the tubular body and, on the other hand, in its inside face, regularly spaced longitudinal projections (16, 36).

2. Steering wheel shaft according to claim 1, characterized in that it has, between the grooves (10), ribs (12) which are solid over a thickness approximately equal to that of the initial tube wall.

3. Steering wheel shaft according to one of claims 1 and 2, characterized in that the ribs (12) are defined by two lateral faces (20, 22) which converge in the direction of the inside of the body and form between them an angle greater than the angle at the centre corresponding to the rib.

4. Steering wheel shaft according to one of the preceding claims, characterized in that the bottoms (14) of the grooves are connected to the outer face (15) of the cylindrical body (1) by conical portions (17).

5. Steering wheel shaft according to one of the preceding claims, characterized in that the profiled part forming the locking element (8) is situated at the end of the cylindrical body (1) close to a steering wheel support (2).

6. Steering wheel shaft according to one of the preceding claims, characterized in that it has at least two to five grooves (10) and the same number of ribs (12) regularly spaced over its circumference.

7. Steering wheel shaft according to one of the preceding claims, characterized in that the projections (16, 28) are separated by grooves which narrow towards the outside (18).

8. Steering wheel shaft according to one of claims 1 to 6, characterized in that the projections (36) are separated by grooves splaying outwards (40).

9. Steering wheel shaft according to one of the preceding claims, characterized in that it has a cylindrical body (1) which forms one piece with a steering wheel support (2) and a universal-joint fork (6).

10. Steering wheel shaft according to one of claims 1 to 8, characterized in that it has two telescopic half-shafts, the outer half-shaft forming the cylindrical body (1) and the profiled part forming the locking element (8) while the inner half-shaft has an outer profile complementary to that of the inner face of this locking element.

11. Steering wheel shaft according to one of the preceding claims, characterized in that the inner projections (26, 36) define a volume with a cylindrical or prismatic general shape.
